# EUROPEAN PATENT APPLICATION

(11) **EP 4 198 711 A1**
(43) Date of publication of application: **21.06.2023**
(21) Application number: 21306815.8
(22) Date of filing: 16.12.2021
(51) Int. Cl.: G06F 3/16

(54) **SYSTEM AND METHOD FOR TIME MANAGEMENT IN VOICE CONTROL APPLICATIONS**

(71) Applicant: InterDigital CE Patent Holdings, SAS, 75017 Paris (FR)
(72) Inventor: MORIN, Thomas, 35760 SAINT-GREGOIRE (FR); GUERMOUD, Hassane, 35510 CESSON-SEVIGNE (FR)
(74) Representative: Interdigital

(57) **Abstract**

A method and device for time management in the workflow of voice control applications is disclosed. A voice control application on a device is accessed and receives voice instructions from a user thereof. The time for receiving the instructions from the user is adjusted based on a second instruction from the user. Thereafter, the voice instructions received from the user of the voice control application are executed.

## Description

### FIELD

The present disclosure generally relates to a user interface for voice control applications. At least one embodiment relates to time management in the workflow of voice control applications.

### BACKGROUND

Voice control applications are available on many devices, such as, for example, mobile phones, tablets, computers, televisions, set-top-boxes, on wearable devices and in vehicles. Voice control uses voice capture and typically a speech-to-text engine. Voice control means that a user is going to express a request for near immediate execution which may have consequences.

Voice control is much different from using voice capture which may be used to edit a body of text or a message. For voice capture, when the voice capture ends or pauses, it can be resumed to continue the editing. With voice control, when the voice capture has ended, the text from the speech is analyzed and the system reacts by executing an action specified by the captured voice control command.

A voice capture may end prematurely if a speaker hesitates to fully compose a voice control command. One example is the recitation of a destination address for a navigation system having voice control input. If a speaker wants to check a portion of the address while speaking a voice-controlled command, a speech silence that is too long stops the voice capture and execute the incomplete request. Generally, a speaker has to speak with no interruption. With existing solutions, a speaker of a voice-controlled command cannot pause for such a verification because a long pause in a voice control command may be terminated and executed with undesirable results. With existing solutions, the command may be executed although the speaker wanted to say more.

It is time consuming and frustrating for the user to re-access the voice control application multiple times in order to execute a request. In addition, an inaccurate or incomplete voice command that is prematurely executed can affect an environment of the user. For Example, a prematurely executed voice command can turn on or off lights or other equipment in a user's environment that is not desired by the speaking user. The embodiments herein have been devised with the foregoing in mind.

### SUMMARY

This summary is provided to introduce a selection of concepts in a simplified form as a prelude to the more detailed description that is presented later. The summary is not intended to identify key or essential features, nor is it intended to delineate the scope of the claimed subject matter.

In one embodiment, a method for time management in a voice controlled application includes accessing a voice control application on a device, receiving first instructions from a user of the voice control application, adjusting a time for receiving instructions from the user based on a second instruction, and performing the instructions received from the user of the voice control application.

Additional features and advantages will be made apparent from the following detailed description of illustrative embodiments which proceeds with reference to the accompanying figures. The drawings are for purposes of illustrating the concepts of the disclosure and is not necessarily the only possible configuration for illustrating the disclosure. Features of the various drawings may be combined unless otherwise stated.

### BRIEF DESCRIPTION OF THE DRAWINGS

The foregoing summary, as well as the following detailed description of illustrative embodiments, is better understood when read in conjunction with the accompanying drawings, which are included by way of example, and not by way of limitation with regard to the present principles. In the drawings, like numbers represent similar elements.
FIG. 1 illustrates an exemplary apparatus for time management in the workflow of a voice control application;
FIG. 2 is depiction of an example device used at initiation of a voice capture;
FIG. 3 is a depiction of an example device detecting a spoken word;
FIG. 4 is a depiction of an example device where a remaining time capture time is indicated;
FIG. 5 is a depiction of an example device where an additional voice captured word is indicated;
FIG. 6 is a depiction of an example device where a shortened remaining time capture time is shown when no additional voice captured words are input to the device;
FIG. 7A is a depiction of an example device where a pause in voice capture is indicated;
FIG. 7B is a depiction of an example device where the time for voice capture is renewed;
FIG. 8 is a depiction of an example device in a voice capture mode where no additional words are being detected and the voice capture timer is moving to expiration;
FIG. 9 is a depiction of an example device after voice capture has ended and the captured text from speech is interpreted as a result list;
FIG. 10 is a flowchart of showing multiple options for time management of a voice capture system; and
FIG. 11 is a flowchart of a particular embodiment of a proposed method for time management in the workflow of a voice control application.

### DETAILED DISCUSSION OF THE EMBODIMENTS

In the following description of various illustrative embodiments, reference is made to the accompanying drawings, which form a part thereof, and in which is shown, by way of illustration, how various embodiments may be practiced. It is to be understood that other embodiments may be utilized, and structural and functional modification may be made without departing from the scope of the present principles.

This disclosure defines several proposed features that are directed to a method for time management in the workflow of voice control applications. The method may take into account implementation on devices, such as, for example, mobile phones, tablets, televisions, computers, set-top-boxes, wearable devices and in automobiles.

Time management with respect to voice control includes providing the user an ability to control the amount of time that a user has to complete a voice command so that a text-to-speech program does not execute a voice control command before the user has completed formulating the voice command.

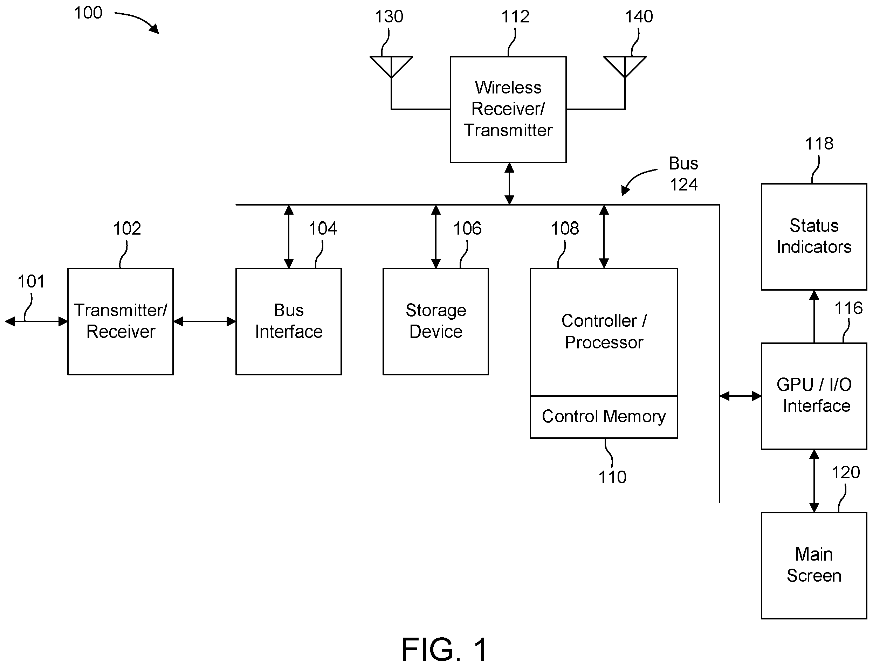

FIG. 1 illustrates an exemplary apparatus for time management in the workflow of a voice control application according to an embodiment of the disclosure. FIG. 1 shows a block diagram of an exemplary apparatus 100 in which various aspects of exemplary embodiments may be implemented. The apparatus 100 may be a device including the various components described below and is configured to perform corresponding processes. Examples, of such devices include, but are not limited to, mobile phones, tablets, televisions, computers (handheld, laptop, desktop, etc.), set-top-boxes, wearable devices, digital assistants, and automobiles. In addition, the architecture of FIG. 1 supports a remote interface (handheld or wired) for such items as a digital television, access point, wired or wireless digital assistants and the like configured to perform the methods described hereinbelow. The apparatus of FIG. 1 can be either a special-purpose machine, or part of a larger machine that performs other tasks. For example, the apparatus of FIG. 1 can be an access point or an access point capable device that can support a wireless local area network for receiving voice control functions.

Various embodiments of the apparatus 100 include at least one processor 108 configured to execute instructions loaded therein for implementing the various processes as discussed below. As described below, the various functions of apparatus 100 are separately described, but may be combined (integrated) into one or more functional units as is well-known by those of skill in the art.

The apparatus 100 of FIG. 1 includes a wired transmitter/receiver interface 102 providing connectivity to such items as a set-top box, digital television, or IP network to receive or transmit digital messages or content. The interface 102 connects to the bus interface 104 which allows access to an internal bus 124 if so implemented. Other non-bus implementations are also possible as is well known to those of skill in the art. Present on bus 124 are a storage device 106 which can be used for any general storage such as retrieved or requested data and network management data, parameters, and digital content, and executable software instruction programs. Storage device 106 may also serve as disk or solid-state storage (e.g., a volatile memory device, or non-volatile memory device) for the information collected as displayable to a user via main screen 120. Types of memory may include but not limited to EEPROM, ROM, PROM, RAM, DRAM, SRAM, flash, magnetic disk drive, and/or optical disk drive. Main executable programs, utility and other programs may be under the control of controller/processor 108.

This controller/processor 108 may be a single processor or a multiplicity of processors performing the tasks of use interface data acquisition, user interface control, and resource management. Controller/processor 108 can perform the method described hereinbelow. Control memory 110 may also supply program instruction and configuration control for controller/processor 108. Program code to be loaded onto the at least one processor 108, to perform the various processes, described hereinbelow, may be stored in the storage device 106 and subsequently loaded into the memory 110, for execution by the at least one processor 108. In accordance with exemplary embodiments, one or more of the processors 108, the memory 110 and the storage device 106, may store one or more of the various items, discussed hereinbelow, during the performance of the various processes, including, but not limited to captured images and video, spoken words, variables, operations and operational logic.

The status indicators 118 are a user interface option and allows a user, system owner, or system manager to see a status of the apparatus 100. Such indicators may include a display, LEDs, speaker, and the like. A graphical processing unit (GPU) and input/output (I/O) interface 116 allows the apparatus 100 to connect to a main display screen 120 that may be used to display at least user interface control information. The I/O interface 116 may also optionally include a be a hardline interface (not shown), such as an Ethernet interface for a local area network or may be an HDMI interface for the main screen 120. Other options for the I/O interface are a RF or IR interface for a remote control of the apparatus 100 itself. Another option of I/O interface 116 is an interactive interface which may include the use of a separate display device (secondary device), keyboard, mouse, light pen, and the like.

Apparatus 100 has a wireless network interface 112 which allows access to and from wireless devices, such as a digital television, IP network interface, access point, set-top box, and the like. Such an interface 112 includes all elements to control a wireless network or other device connected to a wireless network, including the use of wireless network protocols such as IEEE 802.XX, Bluetooth, other near field protocols, and the like for communication between the apparatus 100 and other apparatus that can interact with user-interface apparatus 100.

Either transmitter/receiver (transceiver) 102 or wireless receiver/transmitter 112 may also be communicatively connected via a communication channel with cloud services for performance of the various processes described hereinbelow. Additionally, either communication interface 102 or 112 may also be communicatively connected via a communication channel with cloud services for storage of one or more of the various items during the performance of the processes discussed hereinbelow, including, but not limited to captured voice capture, speech-to-text translation, input images and video, operations and operational logic.

The apparatus 100 also includes a main display screen 120. The display screen is coupled to the processor 108. The display screen 120 may be used to display speech-to-text captured by the voice control application. The main display screen 120 may also be a touch screen to enable performance of the processes discussed hereinbelow.

The exemplary embodiments may be carried out by computer software implemented by the processor 108, or by hardware, or by a combination of hardware and software which may include firmware.

A device which may embody the time management techniques described herein that utilizes voice capture to execute on a voice command may take many forms in order to accommodate a user interface. In one or more embodiments, a device having a user interface may initiate a voice capture system using any one or more of the following:
- A GUI touch button on the display,
- A hard button on the display
- A GUI touch button on an auxiliary device (remote control, button on a steering wheel...)
- A hard button on an auxiliary device (remote control, button on a steering wheel...)
- A voice keyword ("hey Assistant")
- A gesture
- Any event detected by the system (the system asks a question, the system listens when not talking)

In one aspect of the time management of a voice control application described herein, the above list of initiation actions may also be used for actuation of a time extension function (a second user input) as described hereinbelow.

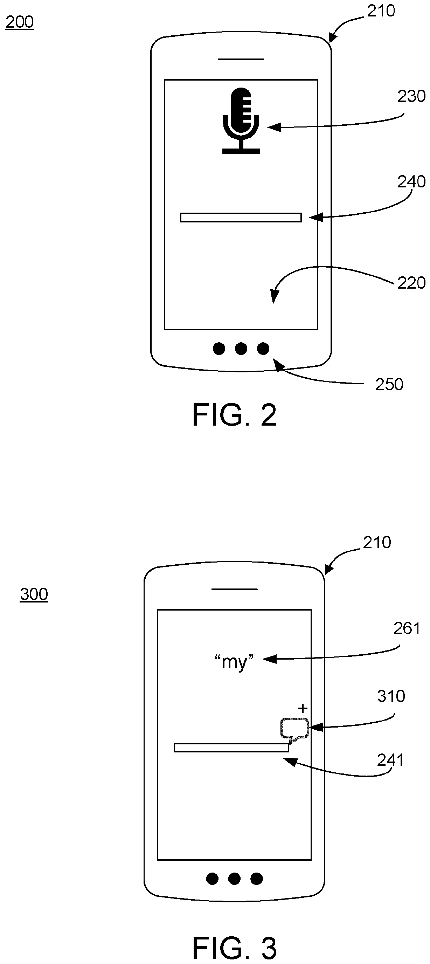

An example of the functionality of time management operations of the present disclosure is provided in FIGs. 2-10 which are described using an illustration with a smartphone graphical design in portrait mode. As can be well appreciated by one of skill in the art, the same concept works with any screen orientation, and any device providing at least voice-control, and preferably a display to provide feedback to a user of a device, such as a smartphone.

In the illustration 200 of FIG. 2, a smartphone 210 has a screen display 220 that may include icons such as a microphone 230, a progress bar 240, and control buttons 250. As indicated above, a process for time management of a voice control application may initiate a voice capture using any of the icons on the display, a hard button, or a voice annunciation by the user. In FIG. 2, voice capture may be started. The device 210 provides user-interface (UI) feedback indicating the remaining time before it cancels the capture (= nothing said, or nothing understood by the system). A timer value for voice capture may be initiated at some beginning value.

In the illustration of 300 of FIG. 3, the same smartphone 210 is shown after the voice capture has started interpreting a user's spoken words. Here, a speech-to-text display is seen at 241 to provide feedback to the user of words already spoken. A progress bar 241 indication may be updated to show a time remaining for the voice capture. Here, the progress bar indicates an example of a beginning of a voice capture with the full time remaining. It is assumed that a voice capture is terminated by the device within a set timeframe (timer value) if a voice detection by the smartphone microphone is not actively detecting a user's voice. A voice balloon 310 may also optionally be presented to indicate that a voice detection feature is active in the device 210. In FIG. 3, the user has started speaking, words are progressively recognized, updated and displayed if the smartphone 210 provides a display. The end-of-capture-timer feedback is displayed as progress bar 241.

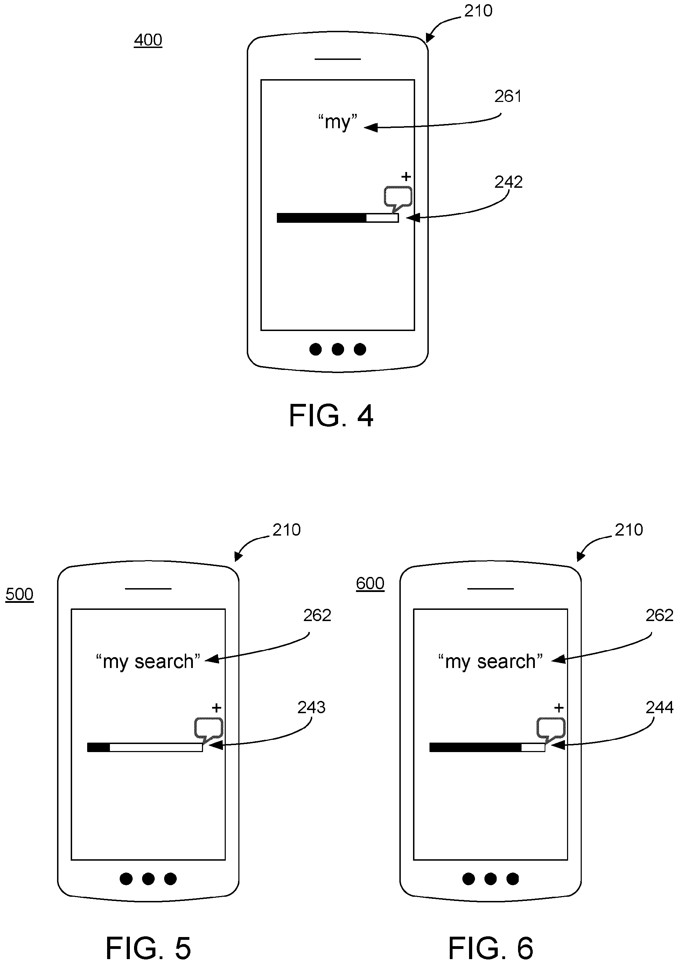

In the illustration 400 of FIG. 4, time has progressed during the voice capture event started by the user. The user has not spoken any additional words. The progress bar 242 is shown that the time for voice capture has elapsed forward, but the speech-to-text display 261 has not changed due to the user's silence. During silence, the end-of-capture-timer representation (progress bar 241) evolves to notify the user about the remaining time to speak. In illustration of FIG. 4, the white timer bar length progressively decreases as time move on.

In the illustration 500 of FIG. 5, a new word is spoken by the user and the progress bar 243 is updated. Every time a new word is recognized, or, more generally, every time the speech-to-text function (text-from-speech) is updated and displayed at 262, the end-of-capture-timer is renewed and the illustrated progress bar 243 is reset. That is, the white portion of the progress bar 243 is refilled with white to indicate more time is available. As time increased between words, the black portion of the progress bar increases in length.

In the illustration 600 of FIG. 6, the user is not speaking anymore; the capture is about to end, and the timer feedback arrives to its end. This is indicated as an increase in the black portion of the progress bar 244 showing that the time remaining (white portion of progress bar is decreasing. In the time management of voice control user interface discussed herein, the user now has an option to extend the time remaining to further express an input via a spoken word.

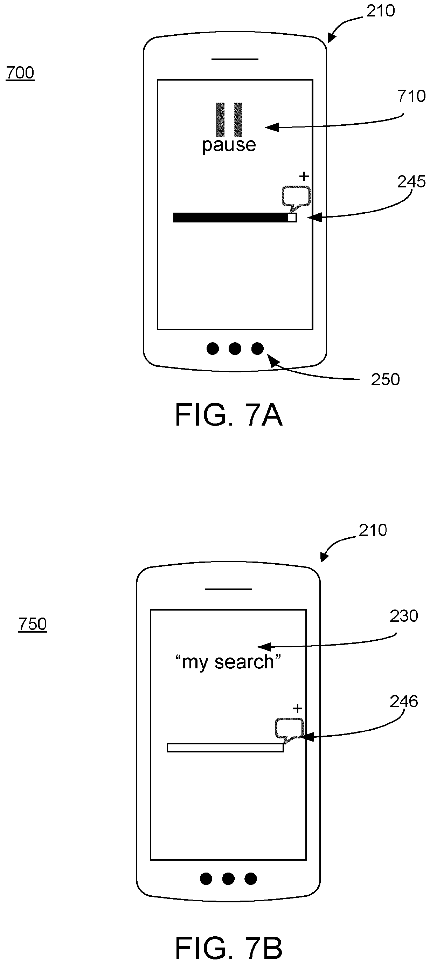

FIGs 7A and 7B illustrate possible alternatives to a user interface to pause or add time to a voice capture event. In the illustration 700 of FIG. 7A, the user has selected to pause the voice capture time period to give the user more time to generate spoken words for a voice capture command. FIG. 7A illustrates the display of smartphone 210 a moment after the user has initiated a pause. In the FIG. 7 illustration, the user has long-pressed (= keeps his finger on) the 'more-time' button. The more time button can be a soft button, such as the plus (+) sign indication on the progress bar 245 or any of the hard buttons such as any of buttons 250. The action of the user's time extension button press request is that the voice capture is paused as indicated by the pause display 710. The user can take time to think or to speak to someone and the smartphone will not react to any captured sounds. In this illustration, the voice-capture may be resumed when the user releases the button (= removes his finger from it). In another embodiment, a voice capture may be paused using a short press to initiate a pause and another short press may be used to end the pause and resume a voice capture.

In the illustration 750 of the alternative of FIG. 7B, the user short-presses (= touches) the 'more-time' button. The voice capture is not paused, but the capture timer indicted by the progress bar 246 is renewed. Here, the user may use of a plus (+) icon touch to add time to the remaining time for a voice capture time period without pausing by long pressing or holding a button corresponding to a pause function. Since a pause mode is not entered, the added time may be indicated and used immediately as the voice capture is still active.

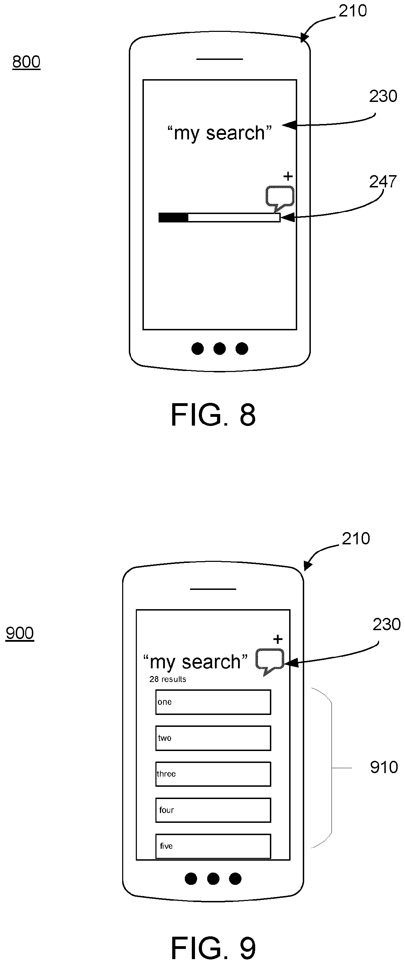

In the illustration 800 of FIG. 8, after the user has extended the time to conduct a voice capture, or after a pause, voice capture continues. This illustration is similar to that of FIG. 5 where voice capture continues with the remaining time available as progress bar 247. In the example of FIG. 8, voice capture is on. The user says nothing, the voice to text indication at 230 indicates the spoken words, and the capture timer indicted by progress bar 247 will expire at the end of the timer period.

In the illustration 900 of FIG. 9, voice capture has ended and the text from speech is interpreted. In this illustration, the interpretation is a list 910 of search results, but it could have been any action. For example, the voice command interpreted by the indicated speech at 230 could have been "switch on the lights in this room" would have led to an action, and not necessarily a list of results.

In one aspect of the disclosure, the method includes having a feedback for the indication of a remaining voice capture time, and in having an interface either to pause or to augment (add to time remaining) or to reset this remaining capture time. Implementations may be numerous wherever voice capture is used. One choice to adjust time management in voice capture applications is to use the same touch-button to add time or pause the capture, but it could have also been implemented using separated hard or soft buttons. Moreover, plenty of user interactions can be used to implement the feature: graphical user interface (GUI) touch button, hard button on the display device, hard button on an auxiliary device, GUI touch button on an auxiliary device, voice keywords not accepted as input, thinking-sounds as "hmm", and gestures may control the management of time for voice capture applications. Application interfaces may include remote controls, and steering wheel located controls. Time adjust may be indicated by button or tough detections or gesture detections using a video-based detection that interprets gestures as well as haptic or motion-controlled gestures such as moving a device or detecting a body part movement.

In one implementation, an existing pause button on a remote-control device may be used to pause or add time to a voice capture function. For example, a system may use the existing "assistant" button to start voice control and to pause voice control. This button generally behaves as a toggle: first press starts voice-capture, second press cancels. There could be another implementation with button-long-press may be used to both pause the capture and renew the capture timer.

In another embodiment, there are also several ways to render the "remaining time feedback" depending on the system architecture and the implementation choices:
- A GUI object on at least one display of the system (progress bar, countdown...)
- Lights
- HUD (Head Up Display: last image below)
- Discrete sounds (not interpreted by voice capture)
- Vibrations / Haptics (ex: amplitude feeling)

In the above-described embodiments to render the remaining time information, one information indication to the user is depicted as a graphical object, such as the progress bar of FIGs 2-8, displayed on a screen. This remaining time information represents the time left before stopping the voice capture. Another embodiment of the remaining time indication may be built into the device as a light emitting diode (LED) based display. Such a display may include one or more LEDs that illuminate to indicate the time left before stopping the voice capture. Such an LED based indication may be an assembly of multiple LEDs that illuminate in a manner to indicate a status of the time remaining. One example would be a row of five LEDs where the number of illuminated LEDs indicate a remaining time. Another implementation option is to control the brightness of one or more LEDs to indicate a time remaining before the end of a voice capture. For example, a LED that gets progressively dimmer may indicate that a time remaining before the end of voice capture is waning.

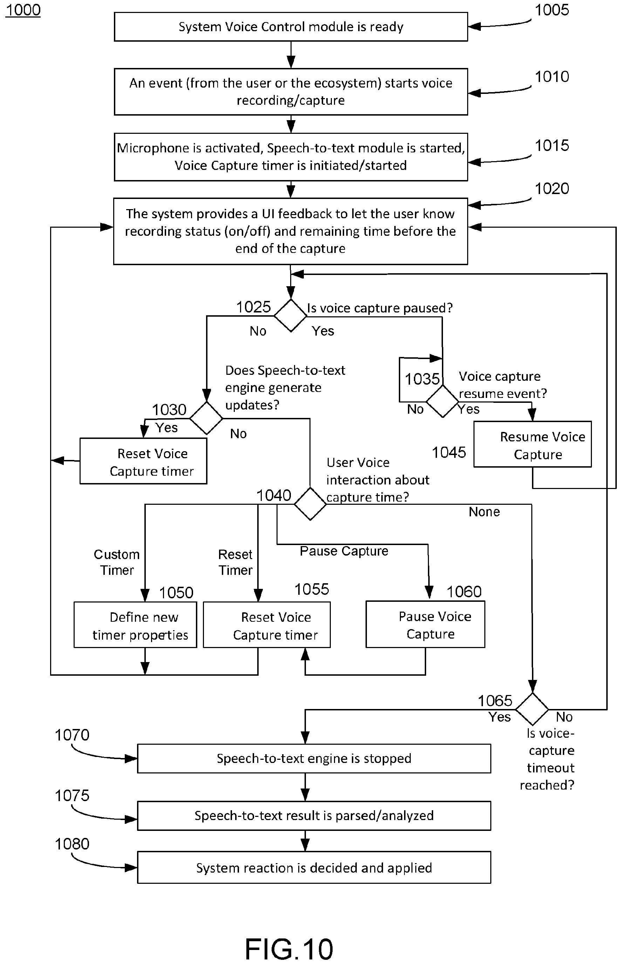

FIG. 10 is a flow diagram 1000 of one possible embodiment with various features that include functional options regarding the time management of a voice capture control system. In FIG. 10 at 1005, the method 1000 starts with the system voice control module ready. A voice control module may include a voice capture application with one or more of the features discussed herein available. The voice control module may be implemented as either hardware or a software application or both that takes advantage of the teachings herein of time management of a voice-controlled application. At 1010, an event (from the user or the ecosystem/environment) starts voice recording/capture. As indicated via the example of FIGs 2-9 above, a voice capture may begin by virtue of a user input to device or other apparatus that may control a voice capture system. At 1015, a microphone is activated, speech-to-text module is started, and a voice capture timer is initiated/started. A speech-to-text module may be a software module that uses the microphone input of a voice of a user and starts detecting speech words such that a speech-to-text conversion function is started. The voice capture function being controlled has a voice capture timer that has a finite capture window in which speech may be detected. At 1020, the voice capture time management system provides a UI feedback to let the user know recording status (on/off) and remaining time before the end of the capture. In one embodiment, a display of the speech-to-text conversion may be displayed along with a remaining time for the voice capture time window as discussed in FIG. 5-6 for example.

In FIG. 10 at 1025, in one option, the time management voice capture system determines if a voice capture is paused such as in FIG. 7A. If yes, the system determines if the voice capture event is being resumed. Upon a yes determination, the voice capture event is resumed at 1045 and the process returns to 1020. If at 1025, it is determined that the voice capture is not paused by the user, then the system determines at 1030 if the speech-to-text engine has generated any updates in word detection. If yes, the voice capture time is reset and the method 1000 returns to 1020.

If at 1030, the speech-to-text detection has not been updated due to a spoken word, then the system determines at 1040 what kind of voice interaction the user has made about voice capture time. If the user has triggered a custom timer, then new timer properties are defined at 1050 and the process 1000 returns to 1020. If the user has triggered a reset of the voice timer at 1055, then the process 1000 returns to 1020. If the user has triggered a pause function of the voice timer, then the pause is entered at 1060 and the voice capture timer is reset at 1055 before returning to 1020. If no user voice capture system interaction with the user is detected at 1040, then the system determines if a voice capture timeout is reached at 1065.

If there is no timeout of the voice capture at 1065, then the process 1000 returns to 1025. If the voice capture timeout is reached at 1065, then the speech-to-text engine is stopped at 1070. Next the speech-to-text result is parsed and analyzed at 1075. At 1080 the system action or reaction to the analyzed text is executed. As indicated in the examples herein, such action may be a search for information or a physical effect on the environment such as turning on a light, starting or stopping a machine, and the like.

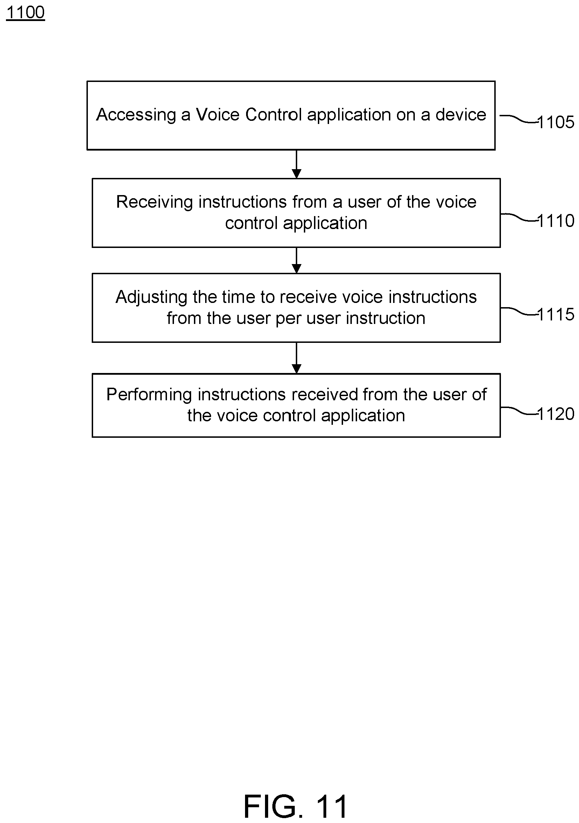

FIG. 11 illustrates a simplified flow diagram 1100 of the method for conducting time management of a voice capture function that executes after a speech-to-text capture time period. The executed text represents a voice-controlled execution of the captured text from speech of a user. At 1105, a voice control application is accessed on a device. At 1110, a microphone or other detection equivalent, such as a gesture detection device, receives first instructions from a user (a first user input) of the voice control application. At 1115, the time management aspect of the voice control system adjusts the time to fully receive the voice instructions from the user. In one specific feature, the user has control over whether to pause or renew, or extend (augment) the time for voice capture that results in a speech-to-text conversion of instruction words that are spoken by the user. Thus, a time for receiving voice instructions from the user (a first user input) is a variable based on a second (different instance) user input. At 1120, the time management voice control system analyzes the captured text and performs the instructions received from the user of the voice control application that are embodied in the captured speech that is converted to text. It is to be noted that the second user input extends the time remaining for the first user input (the voice instructions) to be fully received. In an alternative embodiment, the second user input may be a spoken keyword that is detected by the voice capture application as a spoken control keyword that is used to extend the time remaining for the first user input, which is the voice instructions, to be captured.

According to one aspect of the disclosure, there is provided a method including accessing a voice control application on a device, receiving first instructions (first input) from a user of the voice control application, adjusting a time for receiving the voice instructions (first instructions) from the user based on a second user input, and performing instructions received from the user of the voice control application.

The general principle of the proposed solution relates to managing the time for the voice control application to receive instructions from a user. The time allotted for receiving voice instructions from a user is variable based on a second user input. As such, the user controls the time for receiving the first (voice) instructions before the time management for the voice control system performs the received instructions.

In an embodiment, the device is one of a tablet, a mobile phone, a set-top-box, a computer, a television, a wearable device, and/or a vehicle.

In an embodiment, the time for receiving instructions from the user is indicated on the device. The indication may be, but not limited to, an indication on a screen of the device or an indication from one or more LEDS of the device.

In an embodiment, the voice control application is accessed using one of a graphical user interface (GUI) of the device, a button on the device, a graphical user interface (GUI) on an auxiliary device, a button on an auxiliary device, a spoken keyword, a gesture, and/or an event sensed by the device.

In an embodiment, the instructions are received from the user via voice capture.

In an embodiment, the method further includes recognizing words spoken by the user via voice capture, updating text from speech based on the words spoken by the user via voice capture, and analyzing the text from speech.

In an embodiment, every time text from speech is updated, the time for receiving instructions from the user is one of paused, renewed, and/or augmented.

In an embodiment, the second input (second instruction) from the user to pause, renew, or augment the time to receive the voice instructions is provided using one of the graphical user interface (GUI) of the device, the button on the device, the graphical user interface (GUI) on the auxiliary device, the button on the auxiliary device, a spoken keyword, a gesture, and/or and the event sensed by the device.

According to another aspect of the disclosure, there is provided a device, including at least one processor. The at least one processor is configured to access a voice control application on the device, receive first instructions from a user (voice annunciated instructions) of the voice control application, adjusting a time for receiving the first voice instructions from the user is variable based on a second user input, and perform the first instructions received from the user of the voice control application.

In an embodiment, the device is one of a tablet, a mobile phone, a set-top-box, a computer, a wearable device and/or a vehicle.

In an embodiment, the time for receiving instructions from the user is indicated on the device. The indication may be, but not limited to, an indication displayed on a screen of the device or an indication from one or more LEDS of the device.

In an embodiment, the voice control application is accessed using one of a graphical user interface (GUI) of the device, a button on the device, a graphical user interface (GUI) on an auxiliary device, a button on an auxiliary device, a spoken keyword, a gesture, and/or an event sensed by the device.

In an embodiment, the instructions are received from the user via voice capture.

In an embodiment, the at least one processor is further configured to recognize words spoken by the user via voice capture, update text from speech based on the words spoken by the user via the voice capture, and analyze the text from speech.

In an embodiment, every time text from speech is updated, the time for receiving the voice instructions from the user is one of paused, renewed, and/or augmented.

In an embodiment, the time for receiving first instructions from the user is at least one of paused, renewed, and/or augmented in response to a second input (second instruction) from the user.

In an embodiment, the second input (second instruction) from the user is provided using one of the graphical user interface (GUI) of the device, the button on the device, the graphical user interface (GUI) on the auxiliary device, the button on the auxiliary device, the spoken keyword, the gesture, and/or the event sensed by the device.

Although the present embodiments have been described hereinabove with reference to specific embodiments, the present disclosure is not limited to the specific embodiments, and modifications will be apparent to a skilled person in the art which lie within the scope of the claims.

Many further modifications and variations will suggest themselves to those versed in the art upon making reference to the foregoing illustrative embodiments, which are given by way of example only and which are not intended to limit the scope of the invention, that being determined solely by the appended claims. In particular, the different features from different embodiments may be interchanged where appropriate.

The implementations described herein may be implemented in, for example, a method or process, an apparatus, or a combination of hardware and software. Even if only discussed in the context of a single form of implementation (for example, discussed only as a method), the implementation of features discussed may also be implemented in other forms. For example, implementation can be accomplished via a hardware apparatus, hardware and software apparatus. An apparatus may be implemented in, for example, appropriate hardware, software, and firmware. The methods may be implemented in, for example, an apparatus such as, for example, a processor, which refers to any processing device, including, for example, a computer, a microprocessor, an integrated circuit, or a programmable logic device.

Additionally, the methods may be implemented by instructions being performed by a processor, and such instructions may be stored on one or more processors or non-transitory computer-readable media such as, for example, an integrated circuit, a software carrier or other storage device such as, for example, a hard disk, a compact diskette ("CD" or "DVD"), a random-access memory ("RAM"), a read-only memory ("ROM") or any other magnetic, optical, or solid-state media. The instructions may form an application program tangibly embodied on a computer-readable medium such as any of the media listed above or known to those of skill in the art. The instructions thus stored are useful to execute using elements of hardware and software to perform the steps of the method described herein. In this disclosure, the computer-readable media is useful to instruct a processor to perform the steps of the methods disclosed herein.

## Claims

1. A method, comprising:
accessing a voice control application on a device; (1105)
receiving first instructions using the voice control application; (1110)
adjusting a time for receiving the first instructions based on a second instruction; (1115) and
performing the received first instructions. (1120)

2. The method of claim 1, wherein the time for receiving the first instructions is indicated on the device.

3. The method of any one of the preceding claims, wherein the voice control application is accessed using at least one of a graphical user interface of the device, a button on the device, a graphical user interface on an auxiliary device, a button on an auxiliary device, a spoken keyword, a gesture, or an event sensed by the device.

4. The method of any one of the preceding claims, wherein receiving the first instructions further comprises:
recognizing spoken words using voice capture;
updating text from speech based on the spoken words; and
analyzing the text from speech.

5. The method of claim 4, wherein every time text from speech is updated, the time for receiving the first instructions is one of paused, renewed, or augmented.

6. The method of any one of the preceding claims, wherein adjusting a time for receiving the first instructions is initiated using the second user instruction comprising one of the graphical user interface of the device, the button on the device, the graphical user interface on the auxiliary device, the button on the auxiliary device, the spoken keyword, the gesture and the event sensed by the device.

7. A device (100), comprising:
at least one processor (108) configured to:
access a voice control application on the device;
receive first instructions using the voice control application;
adjust a time for receiving the first instructions based on a second instruction; and
perform the received first instructions.

8. The device of claim 7, wherein the device is one of a tablet, a mobile phone, a set-top-box, a computer, a television, a wearable device, or a vehicle.

9. The device of claims 7 or 8, wherein the time for receiving the first instructions is indicated on the device.

10. The device of any one of claims 7 to 9, wherein the voice control application is accessed using one of a graphical user interface of the device, a button on the device, a graphical user interface on an auxiliary device, a button on an auxiliary device, a spoken keyword, a gesture, or an event sensed by the device.

11. The device of any one of claims 7 to 10, wherein the at least one processor receives the first instructions by being configured to:
recognize words spoken by the user via voice capture;
update text from speech based on the spoken words; and
analyze the text from speech.

12. The device of claim 11, wherein every time text from speech is updated, the time for receiving the first instructions is one of paused, renewed, or augmented.

13. The device of claim 7, wherein the time for receiving the first instructions is at least one of paused, renewed, or augmented in response to the second instruction.

14. The device of claim 7, wherein the second instruction is provided using one of the graphical user interface of the device, the button on the device, the graphical user interface on the auxiliary device, the button on the auxiliary device, the spoken keyword, the gesture, or the event sensed by the device.

15. A computer program product comprising instructions which when executed cause a processor to implement the method of any one of claims 1 to 6.
